# EUROPEAN PATENT APPLICATION

(11) **EP 4 618 286 A1**
(43) Date of publication of application: **17.09.2025**
(21) Application number: 24775055.7
(22) Date of filing: 24.01.2024
(51) Int. Cl.: H01M 50/289, H01M 50/264, H01M 50/207

(54) **BATTERY PACK AND DEVICE INCLUDING SAME**

(30) Priority: 21.03.2023 KR 20230036752
(71) Applicant: LG Energy Solution, Ltd., Seoul 07335 (KR)
(72) Inventor: LEE, Jung Hoon, Daejeon 34122 (KR); UM, Taeki, Daejeon 34122 (KR); RYU, Jaeuk, Daejeon 34122 (KR); KIM, Hyun Jung, Daejeon 34122 (KR)
(74) Representative: Plasseraud IP
(86) International application number: PCT/KR2024/001111
(87) International publication number: WO 2024/196007

(57) **Abstract**

A battery pack according to one embodiment of the present disclosure includes at least one sub-pack in which at least two battery modules among a plurality of battery modules are arranged along the same direction, wherein the at least one sub-pack is stacked along the height direction, wherein in the sub-pack, a spacer is arranged on at least one side of both side surfaces of the battery module, and wherein the sub-pack includes a plurality of bolt parts that pass through both the battery module and the spacer.

## Description

### [TECHNICAL FIELD]

### Cross Citation with Related Application(s)

This application claims the benefit of Korean Patent Application No. 10-2023-0036752 filed on March 21, 2023 with the Korean Intellectual Property Office, the disclosure of which is incorporated herein by reference in its entirety.

The present disclosure relates to a battery pack and a device including the same, and more specifically, to a battery pack that prevents deformation due to a swelling phenomenon between respective battery modules and mutually adjacent battery modules while increasing space efficiency, and a device including the same.

### [BACKGROUND]

Secondary batteries, which are easily applicable to various product groups and has electrical characteristics such as high energy density, are universally applied not only for a portable device but also for an electric vehicle or a hybrid electric vehicle, an energy storage system or the like, which is driven by an electric driving source. Such secondary battery is attracting attention as a new environment-friendly energy source for improving energy efficiency since it gives a primary advantage of remarkably reducing the use of fossil fuels and also does not generate byproducts from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch-type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

In particular, the battery pack must be able to control the swelling phenomenon of the battery cells that occur in a charge and discharge process of the battery cells included inside the battery module. More specifically, the battery cells may cause a phenomenon in which the internal electrolyte decomposes to generate gas and the battery cells swells in a process in which charge/discharge is repeated, that is, a swelling phenomenon. If the swelling of the battery cell cannot be controlled, it may cause a structural deformation of the battery module containing the plurality of battery cells, and may adversely affect the durability and performance of the battery module.

In particular, recently, pure Si cells and high SiO content cells are used as battery cells to manufacture high-capacity battery modules and battery packs, and in the case of the above cells, the degree of swelling is larger. That is, in order to manufacture high-capacity battery modules and battery packs, it is essential to effectively control the swelling of the battery cells inside the battery module or battery pack.

Therefore, there is a need to develop a technology for battery packs that can effectively control the swelling of battery cells while increasing space efficiency.

### [DETAILED DESCRIPTION OF THE INVENTION]

### [Technical Problem]

It is an object of the present disclosure to provide a battery pack that prevents deformation due to a swelling phenomenon between respective battery modules and mutually adjacent battery modules while increasing space efficiency, and a device including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack comprising: at least one sub-pack in which at least two battery modules among a plurality of battery modules are arranged along the same direction, wherein the at least one sub-pack is stacked along the height direction, wherein in the sub-pack, a spacer is arranged on at least one side of both side surfaces of the battery module, and wherein the sub-pack includes a plurality of bolt parts that pass through both the battery module and the spacer.

In the sub-pack, one spacer may be located between the battery modules adjacent to each other.

A pair of protrusions are formed on both side surfaces of the battery module, and the pair of protrusions may include an upper protrusion protruding from the upper edge and a lower protrusion protruding from the lower edge.

The upper protrusion and the lower protrusion may be arranged at the same position on the basis of the height direction of the battery module.

The spacer is arranged between the pair of protrusions, and the bolt part may pass through both the spacer and the pair of protrusions.

In the sub-pack, the battery modules adjacent to each other may be arranged in a direction in which side surfaces on which the pair of protrusions are formed face each other.

The spacer is arranged in a space formed between the battery modules adjacent to each other and between the pair of protrusions, and the bolt part may pass through both the spacer and the pair of protrusions.

Between the battery modules adjacent to each other, the pair of protrusions formed on respective battery modules may be formed at positions that intersect with each other on the upper and lower surfaces of the spacer.

The pair of protrusions formed on respective battery modules may cover the whole of the upper and lower parts of the spacer.

The pair of protrusions include at least one protrusion hole through which the bolt part passes, the spacer includes at least one spacer hole through which the bolt part passes, and the at least one protrusion hole and the at least one spacer hole may be arranged at positions corresponding to each other.

The protrusion hole and the spacer hole may each have a size corresponding to the bolt part.

The pair of protrusions includes a pair of first protrusions and a pair of second protrusions, and the pair of first protrusions and the pair of second protrusions may be arranged spaced apart from each other on the side surface of the battery module.

The pair of first protrusions are formed at positions adjacent to side edges of the battery module, and the pair of second protrusions may be formed at positions adjacent to the center of the side surface of the battery module.

In the sub-pack, the battery modules adjacent to each other are arranged in a direction in which side surfaces on which the pair of protrusions are formed face each other, and between the battery modules adjacent to each other, the pair of first protrusions and the pair of second protrusions formed in respective battery modules may be formed at positions that intersect with each other on the upper and lower surfaces of the spacer.

The pair of first protrusions and the pair of second protrusions formed in respective battery modules may cover the whole of the upper and lower parts of the spacer.

In the sub-packs stacked in the height direction, the battery module arranged at the upper part on the basis of the height direction includes a plurality of first bolt parts, and the battery module arranged at the lower part includes a plurality of second bolt parts, and one end part of the plurality of first bolt parts and one end part of the plurality of second bolt parts may be in contact with each other.

In the sub-packs stacked in the height direction, the plurality of bolt parts may pass through both the battery modules arranged at the same position on the basis of the height direction and the spacer arranged on one side surface of the battery modules.

According to another embodiment of the present disclosure, there is provided a device comprising the above-mentioned battery pack.

### [Advantageous Effects]

According to embodiments, a battery pack of the present disclosure and a device including the same include a spacer and a plurality of bolt parts, and therefore, can prevent deformation due to a swelling phenomenon between respective battery modules and mutually adjacent battery modules while increasing space efficiency.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a perspective view showing a battery pack according to an embodiment of the present disclosure.
FIG. 2 is a perspective view showing a battery module included in the battery pack of FIG. 1.
FIG. 3 is an exploded perspective view of the spacers and bolt parts arranged on both side surfaces of the battery module of FIG. 2.
FIG. 4 is a front view of the battery module of FIG. 2.
FIG. 5 is a perspective view showing some of the sub-packs included in the battery pack of FIG. 1.
FIG. 6 is a top view of the sub-pack of FIG. 5.
FIG. 7 is an exploded perspective view of the spacer and the bolt part arranged between adjacent battery modules in the sub-pack of FIG. 5.
FIG. 8 is a perspective view showing some of the battery modules arranged at the upper and lower parts of the battery pack of FIG. 1.
FIG. 9 is a side view of the battery modules of FIG. 8.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, a battery pack according to an embodiment of the present disclosure will be described.

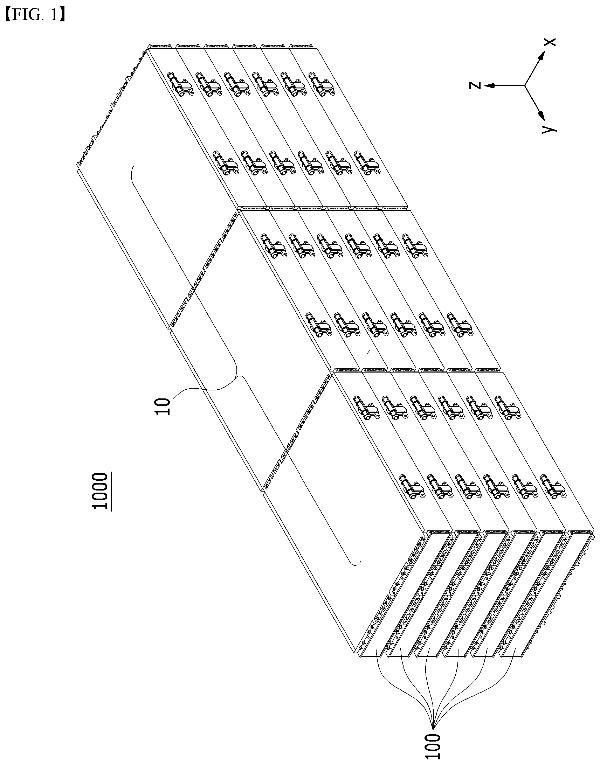

FIG. 1 is a perspective view showing a battery pack according to an embodiment of the present disclosure.

Referring to FIG. 1, the battery pack 1000 according to an embodiment of the present disclosure includes at least one sub-pack 10 in which at least two of the battery modules 100 are arranged along the same direction, wherein the at least one or more sub-packs 10 are stacked along the height direction.

More specifically, the sub-pack 10 may be configured such that at least two battery modules 100 are arranged along the longitudinal direction of the battery module 100. Here, the longitudinal direction of the battery module 100 may be the direction of a relatively long width (long width) among the widths of the battery module 100. As an example, as shown in FIG. 1, the battery module 100 may be formed so that the width in the y-axis direction is longer than the width in the x-axis direction, and the sub-pack 10 may be configured such that at least two battery modules 100 are arranged along the longitudinal direction (y-axis direction) of the battery module 100. As another example, although not shown in FIG. 1, the longitudinal direction of the battery module 100 may be the same as the stacking direction of the battery cell stack included in the battery module 100. However, the arrangement direction of the battery modules 100 in the sub-pack 10 is not limited thereto, and the battery pack 1000 may be arranged in an appropriate direction depending on the device on which it is mounted.

Although not specifically shown in FIG. 1, the battery cells included in the battery module 100 is preferably a pouch type battery cell. As one example, the battery cell may be produced by housing the electrode assembly in a pouch case of a laminate sheet including a resin layer and an inner layer, and then heat-sealing a sealing part of the pouch case. Such a battery cell may be formed in a rectangular sheet-like structure. The battery cells may be configured by a plurality of numbers, and the plurality of battery cells are stacked so as to be electrically connected to each other, thereby forming a battery cell stack. Here, the number of battery cells constituting the battery cell stack may be adjusted according to circumstances.

In the battery pack 1000 of the present embodiment, the battery module 100 may have a relatively larger width than a conventional battery module. In other words, the battery module 100 may have a relatively larger number of battery cells included in the battery cell stack included in the battery module 100 than in a conventional battery module. As an example, the battery module 100 may have a width that is two to three times larger than that of a conventional battery module. However, the battery module is not limited thereto, and can have an appropriate width depending on the device on which the battery pack 1000 is mounted.

Thereby, the battery pack 1000 according to the present embodiment may be configured such that the sub-pack 10 has a relatively large width compared to a conventional case, thereby being able to include a relatively large number of battery cells, and also further increasing the energy density of the battery module 100.

In the battery pack 1000 of the present embodiment, respective sub-packs 10 may include the same number of battery modules 100, without being limited thereto, and can include different numbers of battery modules 100 depending on the conditions required by the device on which the battery pack 1000 is mounted. Further, as shown in FIG. 1, respective sub-packs 10 may be stacked along the height direction. Here, the respective sub-packs 10 may be stacked so that the battery module 100 can be arranged at the same position on the basis of the height direction (z-direction).

Thereby, the battery pack 1000 according to the present embodiment can adjust the number of battery modules 100 included in the sub-packs 10 arranged in the longitudinal direction and/or the number of sub-packs 10 stacked in the height direction, which provides the advantage that the size of the battery pack 1000 can be easily adjusted or the energy capacity can be easily changed according to the conditions required by the device on which the battery pack 1000 is mounted.

In particular, when the battery pack 1000 is mounted on a device such as a passenger car or commercial vehicle, the battery pack 1000 of the present disclosure has the advantage of being able to be easily mounted on various devices in that the length and height need to be adjusted differently.

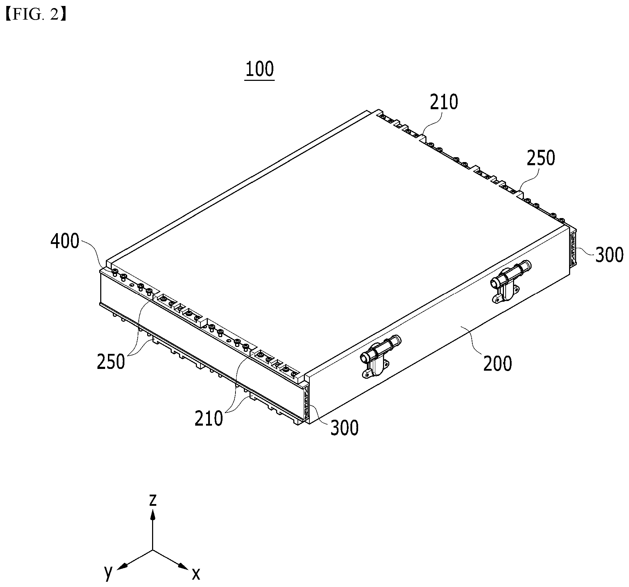

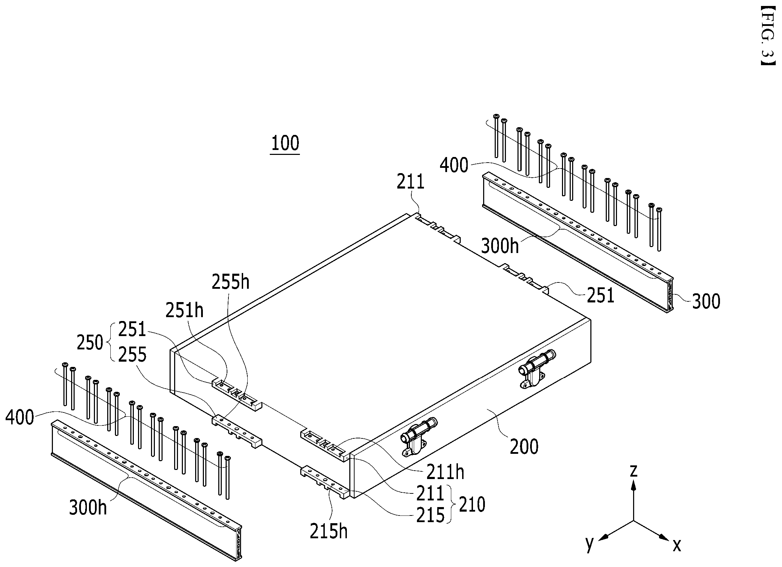

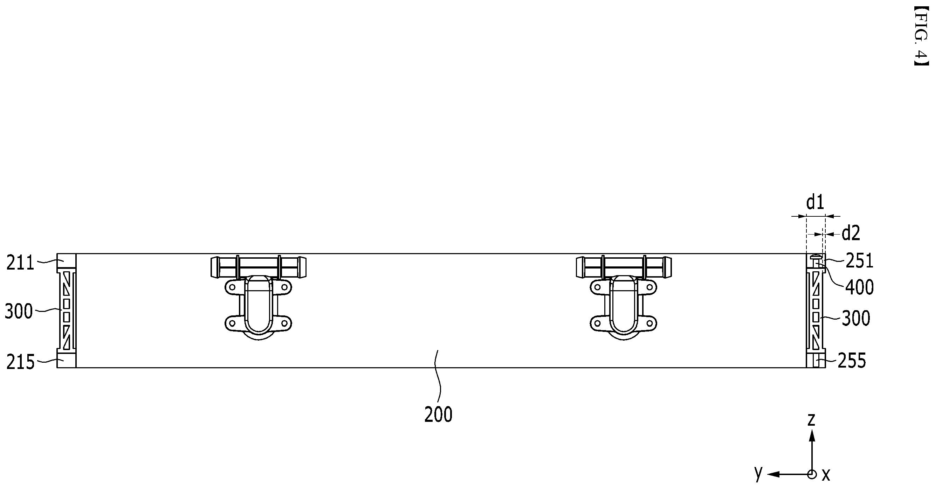

FIG. 2 is a perspective view showing a battery module included in the battery pack of FIG. 1. FIG. 3 is an exploded perspective view of the spacers and bolt parts arranged on both side surfaces of the battery module of FIG. 2. FIG. 4 is a front view of the battery module of FIG. 2.

Referring to FIGS. 1 to 3, the sub-packs 10 included in the battery pack 1000 of the present embodiment may be configured such that a spacer 300 is arranged on at least one side of both side surfaces of the battery module 100, and may include a plurality of bolt parts 400 that pass through both the battery module 100 and the spacer 300.

In the battery module 100 according to the present embodiment, a spacer 300 may be arranged on at least one of both side surfaces of the battery module 100. Here, both side surfaces of the battery module 100 may be side portions where no electrical connection structure such as a low voltage(LV) connection structure is located. However, the side surface is not limited thereto, and can be included in the present embodiment as long as it is a surface that can ensure a space where the spacer 300 can be located.

More specifically, a pair of protrusions 210 and 250 may be formed on both side surfaces of the battery module 100. The battery module 100 may include a module frame 200 that accommodates a battery cell stack (not shown), and a pair of protrusions 210 and 250 may be formed on both side surfaces of the module frame 200.

As an example, the module frame 200 may be a metal plate-shaped mono frame in which the upper and lower surfaces and both side surfaces are integrated. As another example, the module frame 200 may include a metal plate-shaped lower frame whose upper surface and both side surfaces are integrated, and an upper cover that covers the upper surface of the lower frame. As another example, the module frame 200 may be a frame in a form in which two L-shaped frames are coupled. As another example, the module frame 200 may be a frame of a 4-plate structure in which an upper surface plate, a lower surface plate, a left plate, and a right plate are coupled. However, the present embodiment is not limited thereto, and any frame can be applied to the present embodiment as long as it can protect the internal components of the battery module 100.

Here, respective components of the module frame 200 may be joined by welding or the like in a state in which corresponding edge parts are in contact with each other, or may be fixed to each other through separate fastening members. Further, each component of the module frame 200 may be composed of a metal material having a predetermined strength.

Next, one side surface of the module frame 200 will be mainly described, and the opposite side surface of the module frame 200 may also be described similarly.

In the battery module 100 according to the present embodiment, the pair of protrusions 210 and 250 may include upper protrusions 211 and 251 protruding from the upper edge and lower protrusions 215 and 255 protruding from the lower edge. Here, the upper edge may refer to a corner where the upper and side surfaces of the module frame 200 are in contact with each other, and the lower edge may refer to a corner where the lower and side surface of the module frame 200 are in contact with each other.

As an example, the pair of protrusions 210 and 250 may be integrated with the module frame 200. In other words, the pair of protrusions 210 and 250 may be integrated with the upper part of the module frame 200 and/or the module frame 200. However, the present embodiment is not limited thereto, and the pair of protrusions 210 and 250 may be coupled to the module frame 200 by a method such as welding.

Further, in the pair of protrusions 210 and 250, the upper protrusions 211 and 251 and the lower protrusions 215 and 255 may be arranged at the same position on the basis of the height direction (z-axis direction) of the battery module 100. However, the present embodiment is not limited thereto, and a case where the upper protrusions 211 and 251 and the lower protrusions 215 and 255 are arranged at different positions on the basis of the height direction (z-axis direction) of the battery module 100 can also be in the embodiment.

As an example, the pair of protrusions 210 and 250 may include a pair of first protrusions 210 and a pair of second protrusions 250. Here, the pair of first protrusions 210 includes a first upper protrusion 211 and a first lower protrusion 215, and the pair of second protrusions 250 includes a second upper protrusion 251 and a second lower protrusion 255. Further, the pair of first protrusions 210 and the pair of second protrusions 250 may be arranged spaced apart from each other on the side surface of the battery module 200. However, the present embodiment is not limited thereto, and the number of a pair of protrusions 210 and 250 may be appropriately changed as necessary.

As an example, as shown in FIGS. 2 and 3, the pair of first protrusions 210 are formed at a position adjacent to a side edge of the battery module, and the pair of second protrusions 250 may be formed at a position adjacent to the center of the side surface of the battery module 100. Here, the separation distance between the pair of first protrusions 210 and the pair of second protrusions 250 may be larger than the length of the pair of first protrusions 210. Further, the separation distance between the pair of first protrusions 210 and the pair of second protrusions 250 may be larger than the length of the pair of second protrusions 250.

In the battery module 100 according to the present embodiment, spacers 300 may be arranged on both side surfaces of the battery module 100 as shown in FIGS. 2 to 4. However, the present embodiment is not limited thereto, the spacer 300 may be arranged on only one of the two side surfaces of the battery module 100, and the spacer 300 may not be arranged on the remaining one side surface.

More specifically, in the battery module 100 according to the present embodiment, the spacer 300 may be arranged between a pair of protrusions 210 and 250 formed on both side surfaces of the module frame 200. As an example, as shown in FIGS. 2 and 4, the spacer 300 may be arranged between the upper protrusions 211 and 251 and the lower protrusions 215 and 255.

Here, the height of the spacer 300 may correspond to the distance between the upper protrusions 211 and 251 and the lower protrusions 215 and 255. As an example, the height of the spacer 300 may be equal to or smaller than the distance between the upper protrusions 211 and 251 and the lower protrusions 215 and 255.

Further, the width d1 of both end parts of the spacer 300 may correspond to the extent to which the pair of protrusions 210 and 250 protrude. As an example, the width d1 of both end parts of the spacer 300 may be about 20 mm, without being limited thereto, and can be appropriately changed depending on the degree of occurrence of the swelling phenomenon in the battery module 100.

Accordingly, the battery module 100 can prevent deformation due to the swelling phenomenon of the battery cells located within the battery module 100 through the rigidity of the spacer 300.

Further, the central part of the spacer 300 may have a relatively small width compared to the end part of the spacer 300. As an example, the spacer 300 may have a structure with a cross section similar to that of an 'I'. As another example, the difference d2 in width between the end part and the central part of the spacer 300 may be about 3 mm. However, the present disclosure is not limited thereto, and the shape of the spacer 300 may be appropriately changed depending on the degree of occurrence of the swelling phenomenon in the battery module 100.

Accordingly, in the battery module 100 according to the present embodiment, the central part of the spacer 300 may be spaced apart from the side surface of the battery module 100 by a prescribed distance, whereby when a swelling phenomenon occurs in the direction of both sides of the battery module 100, it is possible to secure an empty space in which the battery module 100 can be expanded in the direction of both sides.

As an example, the spacer 300 may be made of a material such as aluminum (Al). However, the spacer is not limited thereto, and can be applied to the present embodiment as long as it is made of a material that has enough rigidity to prevent deformation of the battery module 100 due to the swelling phenomenon of the battery cells.

Referring to FIGS. 2 to 4, in the battery module 100 according to the present embodiment, the bolt part 400 may pass through both the spacer 300 and the pair of protrusions 210 and 250. More specifically, the plurality of bolt parts 400 may pass through the spacer 300 or the spacer 300 and the pair of protrusions 210 and 250. **In** other words, the bolt part 400 located at a position corresponding to the spacer 300 among the plurality of bolt parts 400 may pass through the spacer 300, and the bolt part 400 located at a position corresponding to the pair of protrusions 210 and 250 may pass through the spacer 300 and the pair of protrusions 210 and 250.

As an example, the bolt part 400 may be made of a material such as stainless steel or carbon steel for machine structure (for example, SC45C). However, the present embodiment is not limited thereto, and the bolt part can be applied to the present embodiment as long as it is made of a material that has enough rigidity to stably fix the battery module 100 and the spacer 300.

Accordingly, in the battery module 100 according to the present embodiment, as the battery module 100 and the spacer 300 are fixed by the bolt part 400, it is possible to more effectively prevent deformation due to the swelling phenomenon of the battery cells located within the battery module 100 through the rigidity of the spacer 300 and the bolt part 400.

Referring to FIG. 3, in the battery module 100 according to the present embodiment, the pair of protrusions 210 and 250 may include at least one or more protrusion holes 211h, 215h, 251h, and 255h through which the bolt part 400 passes.

More specifically, in the pair of first protrusions 210, the first upper protrusion 211 may include first protrusion holes 211h and 215h through which the bolt portion 400 pass through the bolt part 400 and the first lower protrusion 215, respectively. Further, the pair of second protrusions 250 also include second protrusion holes 251h and 255h through which the bolt part 400 passes through the second upper protrusion 251 and the second lower protrusion 255, respectively. However, the number of protruding holes 211h, 215h, 251h and 255h is not limited to those shown in FIGS. 2 and 3, and can be appropriately changed depending on the size of the pair of first protrusions 210 and the pair of second protrusions 250.

Further, the spacer 300 may include at least one spacer hole 300h through which the bolt part 400 passes. More specifically, on one side surface of the battery module 100, the spacer 300 is arranged at a position where at least one protrusion hole 211h, 215h, 251h, 255h and at least one spacer hole 300h correspond to each other.

As an example, as shown in FIGS. 2 and 3, the spacer 300 may include a plurality of spacer holes 300h that are spaced apart at a predetermined interval. As another example, the spacer 300 may have the spacer hole 300h that can be formed only at positions corresponding to at least one protrusion hole 211h, 215h, 251h, and 255h.

However, the number of spacer holes 300h is not limited to those shown in FIGS. 2 and 3, and can be appropriately changed depending on the size of the pair of first protrusions 210 and the pair of second protrusions 250 or the size of the spacer 300.

Further, in the battery module 100 according to the present embodiment, the protrusion holes 211h, 215h, 251h, and 255h and the spacer hole 300h may each have a size corresponding to that of the bolt part 400. More specifically, the protrusion holes 211h, 215h, 251h and 255h and the spacer hole 300h may have a size that allows the bolt part 400 to be stably fastened.

Accordingly, in the battery module 100 according to the present embodiment, the bolt part 400 simultaneously passes through the pair of protrusions 210 and 250 and the spacer 300 that are integrated with the battery module 100, which provides the advantage that the battery module 100 and the spacer 300 are stably fixed, and ease of assembly and space efficiency are improved.

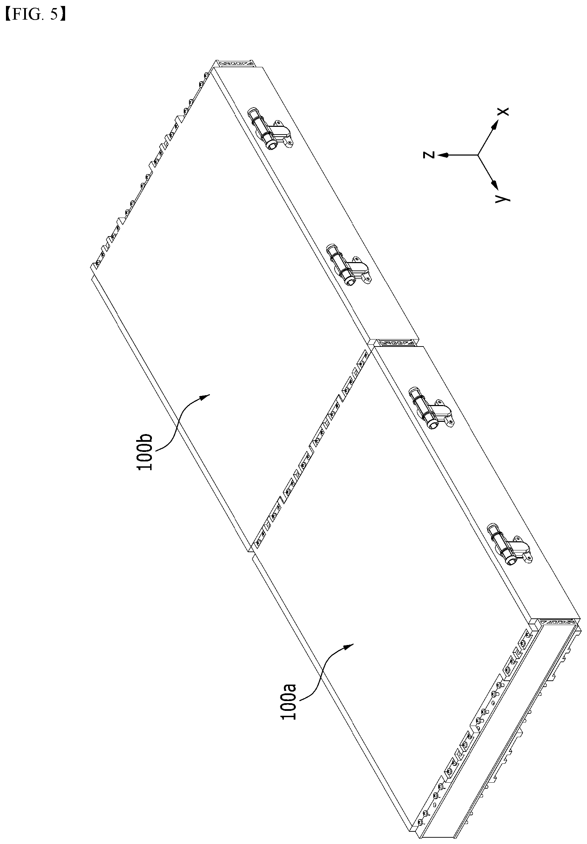

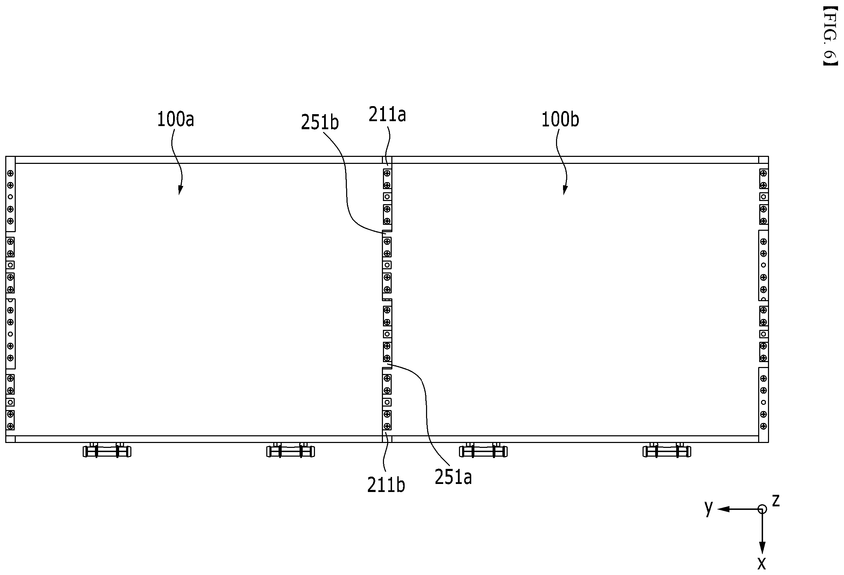

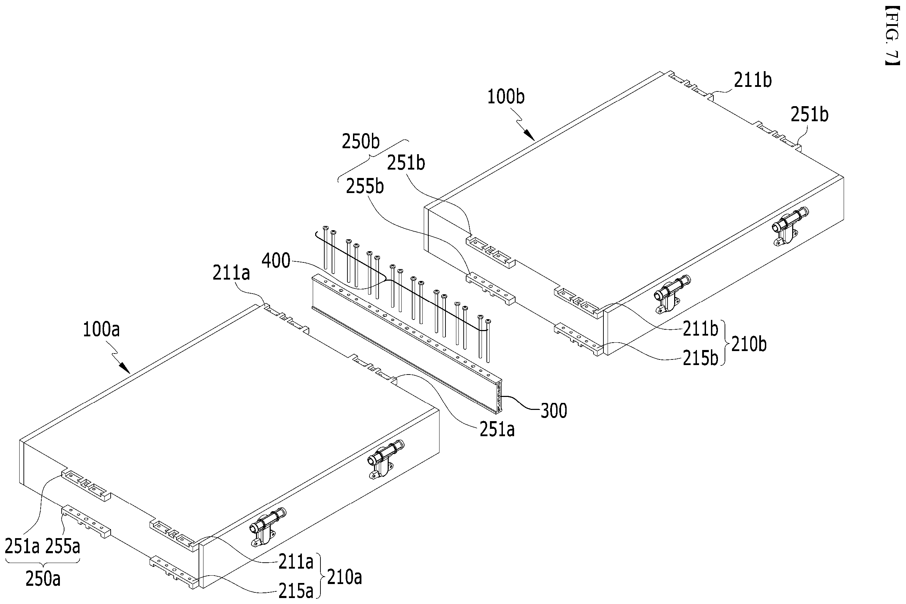

FIG. 5 is a perspective view showing some of the sub-packs included in the battery pack of FIG. 1. FIG. 6 is a top view of the sub-pack of FIG. 5. FIG. 7 is an exploded perspective view of the spacer and the bolt part arranged between adjacent battery modules in the sub-pack of FIG. 5.

Referring to FIG. 1 and FIGS. 5 to 7 , in the sub-pack 10 included in the battery pack 1000 according to the present embodiment, one spacer 300 may be located between the battery modules 100a and 100b adjacent to each other. More specifically, the sub-pack 10 may be configured such that the first battery module 100a and the second battery module 100b are arranged along the same direction.

Here, the first battery module 100a and the second battery module 100b correspond to battery modules adjacent to each other, and one spacer 300 may be located between the first battery module 100a and the second battery module 100b. In other words, one spacer 300 may be located between the side surfaces of the first battery module 100a and the second battery module 100b facing each other.

More specifically, the battery modules 100a and 100b adjacent to each other may be arranged in such a direction that the side surfaces on which the pair of protrusions 210a, 210b, 250a, and 250b are formed face each other. As an example, one side surface of the first battery module 100a where a pair of protrusions 210a and 250a are formed, and one side surface of the second battery module 100b where the pair of protrusions 210b and 250b is formed may be arranged in a direction facing each other.

That is, in the sub-pack 10 according to the present embodiment, a spacer 300 may be arranged in a space formed between the battery modules 100a and 100b adjacent to each other and between a pair of protrusions 210a, 210b, 250a and 250b. More specifically, between battery modules 100a and 100b adjacent to each other, a pair of protrusions 210a, 210b, 250a and 250b formed in each battery module 100a and 100b may be formed at positions that intersect with each other on the upper surface of the spacer 300.

As an example, as shown in FIGS. 5 to 7, between adjacent battery modules 100a and 100b, a pair of first protrusions 210a and 210b and a pair of second protrusions 250a and 250b formed in respective battery modules 100a and 100b may be formed at positions that intersect with each other on the upper and lower surfaces of the spacer 300. That is, on the upper and lower surfaces of the spacer 300, a pair of first protrusions 210a and a pair of second protrusions 250a formed on the first battery module 100a, and a pair of first protrusions 210b and a pair of second protrusions 250b formed on the second battery module 100b may be formed at positions that intersect each other.

Thereby, in the battery module 100 according to the present embodiment, a pair of protrusions 210a, 210b, 250a and 250b of the battery modules 100a and 100b adjacent to each other can intersect with each other, which provides the advantage of being able to minimize the spacing and parts between the battery modules 100a and 100b adjacent to each other, and minimizing the space loss between the battery modules 100a and 100b adjacent to each other.

Further, in the sub-pack 10 according to the present embodiment, the upper and/or lower parts of the spacer 300 may be covered by a pair of protrusions 210a, 210b, 250a and 250b formed on respective battery modules 100a and 100b. As an example, a pair of protrusions 210a, 210b, 250a and 250b formed on respective battery modules 100a and 100b may cover the whole of the upper and lower parts of the spacer 300. More specifically, a pair of first protrusions 210a and 210b and a pair of second protrusions 250a and 250b formed in respective battery modules 100a and 100b can cover the whole of the upper and lower parts of the spacer.

Further, referring to FIGS. 5 to 7, in the sub-pack 10 according to the present embodiment, the bolt part 400 can pass through both a spacer 300 located between the battery modules 100a and 100b adjacent to each other and a pair of protrusions 210a, 210b, 250a and 250b formed on respective battery modules 100a and 100b.

Thereby, in the battery module 100 according to the present embodiment, the battery modules 100a and 100b adjacent to each other can be fixed to the same spacer 300 by the bolt part 400, which provides the advantage of increasing space efficiency while minimizing parts. Further, there is an advantage in that deformation due to the swelling phenomenon of battery cells located in mutually adjacent battery modules 100a and 100b can be prevented at the same time.

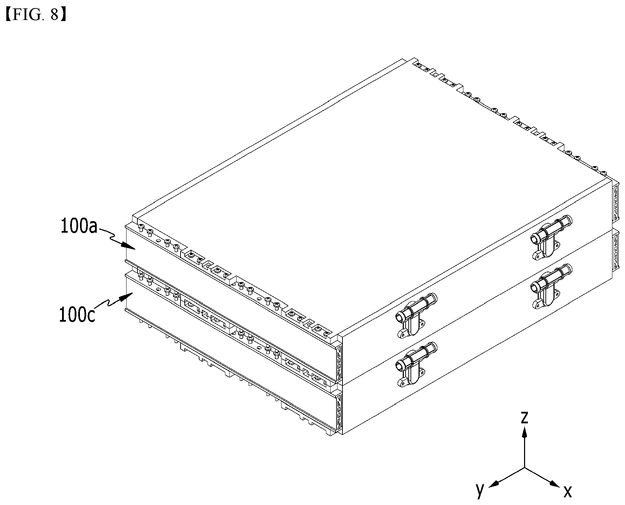

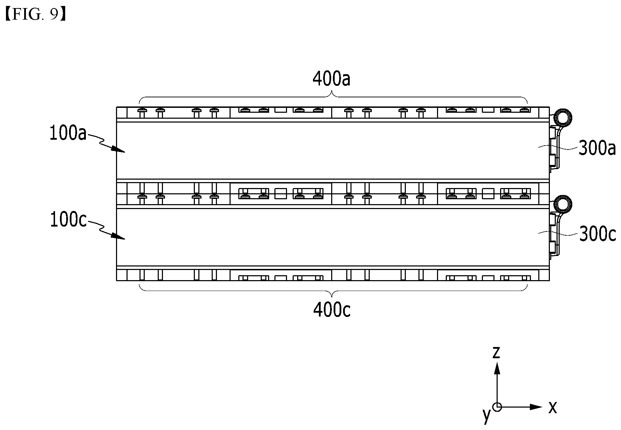

FIG. 8 is a perspective view showing some of the battery modules arranged at the upper and lower parts of the battery pack of FIG. 1. FIG. 9 is a side view of the battery modules of FIG. 8.

Referring to FIGS.1, 8 and 9, in the battery pack 1000 according to the present embodiment, the sub-packs 10 may be stacked in the height direction (z-axis direction). More specifically, the battery pack 1000 may include a first battery module 100a arranged at the upper part and a third battery module 100c arranged at the lower part on the basis of the height direction (z-axis direction).

Here, as shown in FIG. 9, the first battery module 100a may include a plurality of first bolt parts 400a passing through the first battery module 100a and the first spacer 300a, and the third battery module 100c may include a plurality of second bolt parts 400c passing through the third battery module 100c and the second spacer 300c. Here, the plurality of first bolt parts 400a and the plurality of second bolt parts 400c may be arranged at positions corresponding to each other.

As shown in FIG. 9, one end part of the plurality of first bolt parts 400a and one end part of the plurality of second bolt parts 400c may be in contact with each other. As an example, one end part of the plurality of first bolt parts 400a and one end part of the plurality of second bolt parts 400c may be joined to each other by a method such as welding.

Further, although not shown in FIG. 9, a plurality of bolt parts may pass through all of the spacers 300a and 300c arranged on one side surface of the first battery module 100a and the third battery module 100c, which are arranged at the same position on the basis of the height direction. In other words, the plurality of bolt parts are not divided into a plurality of first bolt parts 400a and a plurality of bolt parts 400c as shown in FIG. 9, and may be a long-bolt extending from the upper part of the first battery module 100a to the lower part of the third battery module 100c.

Accordingly, in the battery module 100 according to the present embodiment, the battery modules 100a and 100c arranged at the same position on the basis of the height direction can be fixed by bolt parts 400a and 400c arranged at positions corresponding to each other, which offers the advantage of more stably fixing the battery modules 100a and 100c and spacers 300a and 300c while minimizing the parts.

In addition, although not shown in detail in FIGS. 1 and 9, in the case of the sub-pack 10 located at the lowest end of the battery pack 1000, the bolt part 400 extends relatively longer than the lower part of the battery module 100, which offers the advantage that the bolt part 400 can also perform the role of mounting the battery pack 1000 to a device on which it is mounted.

According to yet another embodiment of the present disclosure, the is provided a device comprising the above-mentioned battery pack. Such a device can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

10: sub-pack
100: battery module
200: module frame
210: a pair of first protrusions
211: first upper protrusion
215: first lower protrusion
250: a pair of second protrusions
251: second upper protrusion
255: second lower protrusion
300: spacer
400: bolt part
1000: battery pack

## Claims

1. A battery pack comprising:
at least one sub-pack in which at least two battery modules among a plurality of battery modules are arranged along the same direction,
wherein the at least one sub-pack is stacked along the height direction,
wherein in the sub-pack, a spacer is arranged on at least one side of both side surfaces of the battery module, and
wherein the sub-pack includes a plurality of bolt parts that pass through both the battery module and the spacer.

2. The battery pack of claim 1, wherein:
in the sub-pack, one spacer is located between the battery modules adjacent to each other.

3. The battery pack of claim 2, wherein:
a pair of protrusions are formed on both side surfaces of the battery module, and
the pair of protrusions include an upper protrusion protruding from the upper edge and a lower protrusion protruding from the lower edge.

4. The battery pack of claim 3, wherein:
the upper protrusion and the lower protrusion are arranged at the same position on the basis of the height direction of the battery module.

5. The battery pack of claim 3, wherein:
the spacer is arranged between the pair of protrusions, and
the bolt part passes through both the spacer and the pair of protrusions.

6. The battery pack of claim 3, wherein:
in the sub-pack, the battery modules adjacent to each other are arranged in a direction in which side surfaces on which the pair of protrusions are formed face each other.

7. The battery pack of claim 6, wherein:
the spacer is arranged in a space formed between the battery modules adjacent to each other and between the pair of protrusions, and
the bolt part passes through both the spacer and the pair of protrusions.

8. The battery pack of claim 6, wherein:
between the battery modules adjacent to each other, the pair of protrusions formed on respective battery modules are formed at positions that intersect with each other on the upper and lower surfaces of the spacer.

9. The battery pack of claim 8, wherein:
the pair of protrusions formed on respective battery modules cover the whole of the upper and lower parts of the spacer.

10. The battery pack of claim 3, wherein:
the pair of protrusions include at least one protrusion hole through which the bolt part passes,
the spacer includes at least one spacer hole through which the bolt part passes, and
the at least one protrusion hole and the at least one spacer hole are arranged at positions corresponding to each other.

11. The battery pack of claim 10, wherein:
the protrusion hole and the spacer hole each have a size corresponding to the bolt part.

12. The battery pack of claim 3, wherein:
the pair of protrusions includes a pair of first protrusions and a pair of second protrusions, and
the pair of first protrusions and the pair of second protrusions are arranged spaced apart from each other on the side surface of the battery module.

13. The battery pack of claim 12, wherein:
the pair of first protrusions are formed at positions adjacent to side edges of the battery module, and
the pair of second protrusions are formed at positions adjacent to the center of the side surface of the battery module.

14. The battery pack of claim 12, wherein:
in the sub-pack, the battery modules adjacent to each other are arranged in a direction in which side surfaces on which the pair of protrusions are formed face each other, and
between the battery modules adjacent to each other, the pair of first protrusions and the pair of second protrusions formed in respective battery modules are formed at positions that intersect with each other on the upper and lower surfaces of the spacer.

15. The battery pack of claim 14, wherein:
the pair of first protrusions and the pair of second protrusions formed in respective battery modules cover the whole of the upper and lower parts of the spacer.

16. The battery pack of claim 1, wherein:
in the sub-packs stacked in the height direction, the battery module arranged at the upper part on the basis of the height direction includes a plurality of first bolt parts, and the battery module arranged at the lower part includes a plurality of second bolt parts, and
one end part of the plurality of first bolt parts and one end part of the plurality of second bolt parts are in contact with each other.

17. The battery pack of claim 1, wherein:
in the sub-packs stacked in the height direction, the plurality of bolt parts pass through both the battery modules arranged at the same position on the basis of the height direction and the spacer arranged on one side surface of the battery modules.

18. A device comprising the battery pack of claim 1.
